# FASCICULE DE BREVET EUROPEEN

(11) **EP 3 591 428 B1**
(45) Date de publication et mention de la délivrance du brevet: **27.01.2021**
(21) Numéro de dépôt: 19176826.6
(22) Date de dépôt: 27.05.2019
(51) Int. Cl.: G01S 7/497, F41G 3/08, F41G 3/14

(54) **SYSTÈME ET PROCÉDÉ DE SUIVI D'UNE CIBLE ET DE COMPENSATION DE TURBULENCES ATMOSPHÉRIQUES**
SYSTEM UND VERFAHREN ZUR NACHVERFOLGUNG EINES ZIELS UND ZUR KOMPENSIERUNG VON ATMOSPHÄRISCHEN TURBULENZEN
SYSTEM AND METHOD FOR MONITORING A TARGET AND FOR COMPENSATING ATMOSPHERIC TURBULENCE

(30) Priorité: 05.07.2018 FR 1800716
(43) Date de publication de la demande: 08.01.2020
(73) Titulaire: Compagnie Industrielle des Lasers Cilas, 45100 Orléans (FR)
(72) Inventeur: GRASSER, Régis, 45160 Olivet (FR); NAIIM-HABIB, Marie, 45100 Orléans (FR); BERTHOMIER, Jean-Marc, 45650 Saint-Jean-Le-Blanc (FR); LEVAL, Julien, 45750 Saint-Pryvé-Saint-Mesmin (FR)
(74) Mandataire: Gevers & Orès

(56) Documents cités:
- CN-A- 102 944 932
- US-A- 4 776 691
- US-A1- 2003 206 350

## Description

### DOMAINE TECHNIQUE

La présente invention concerne le domaine des dispositifs à visée laser, et plus particulièrement, un système de suivi de cible et de compensation de turbulences atmosphériques.

### ÉTAT DE LA TECHNIQUE

Le contrôle de paramètres de rayon laser ou de tout autre rayon lumineux directionnel est un enjeu important. Dans la suite de la description, nous utiliserons le terme « rayon » ou « rayon lumineux » pour parler du rayon laser ou de tout autre rayon lumineux directionnel.

La distance entre la source lumineuse, qui émet le rayon lumineux pour désigner une cible, et la cible peut être très grande. Généralement, l'utilisation d'un seul rayon lumineux n'est pas suffisante pour traiter la cible, car la puissance d'un seul rayon lumineux est fortement affaiblie par le trajet entre la source du rayon lumineux et la cible. Ainsi, usuellement, plusieurs rayons lumineux élémentaires sont utilisés en combinaison ; ce qui permet d'obtenir un rayon lumineux très puissant formé par l'ensemble des rayons lumineux élémentaires.

Quand un grand nombre de rayons lumineux élémentaires est utilisé, il est nécessaire de connaître la configuration de chacun des rayons lumineux séparément afin d'ajuster leurs paramètres pour maintenir une puissance maximale du rayon lumineux formé par l'ensemble des rayons lumineux élémentaires. Toutefois, il est difficile de déterminer quel rayon lumineux élémentaire possède une configuration de fonctionnement qui réduit la puissance du rayon lumineux formé par l'ensemble des rayons lumineux élémentaires, afin d'ajuster la configuration dudit rayon lumineux.

Il existe des dispositifs permettant de résoudre ce problème (comme divulgués dans les publications US 2003/0206350 A1, US 4776691 ou CN 102 944 932 A). Mais, ces dispositifs mettent en œuvre des boucles optiques adaptatives complexes ou des dispositifs demandant des quantités importantes de calculs. Ces dispositifs ne sont donc pas adaptés pour des systèmes comportant un nombre important de rayons lumineux élémentaires.

### EXPOSÉ DE L'INVENTION

La présente invention a pour objet de pallier ces inconvénients en proposant un système permettant de suivre une cible et de compenser les turbulences générées par l'atmosphère.

À cet effet, l'invention concerne un système de suivi d'une cible et de compensation de turbulences atmosphériques.

Selon l'invention, le système comprend :
- au moins deux sources lumineuses configurées pour émettre chacune un rayon lumineux vers la cible selon un axe de propagation dans un sens d'émission,
- au moins deux collimateurs, chacun des collimateurs étant associé respectivement à une des sources lumineuses, chacun des collimateurs étant configuré pour collimater le rayon lumineux de la source lumineuse associée,
- un dispositif de référence disposé en aval de tous les collimateurs dans le sens d'émission, le dispositif de référence comprenant un plan réfléchissant configuré pour réfléchir une partie du rayon lumineux sortant de tous les collimateurs,
- au moins deux modules de visée, chacun des modules de visée étant associé respectivement et de façon solidaire à une des sources lumineuses, chacun des modules de visée étant configuré pour amener le rayon lumineux de la source lumineuse à atteindre une zone prédéterminée de la cible,
- au moins deux modules de détection, chacun des modules de détection étant associé respectivement et de façon solidaire à une des sources lumineuses, chacun des modules de détection comprenant une première surface de détection configurée pour recevoir la partie du rayon réfléchie par le dispositif de référence, la partie du rayon réfléchie par le plan réfléchissant du dispositif de référence étant reçue et détectée sur la première surface de détection à une position courante,
- au moins deux modules de détermination d'angle de déviation, configurés pour déterminer respectivement un angle de déviation à partir d'un décalage spatial sur la première surface de détection entre une position de référence sur la première surface de détection et la position courante, l'angle de déviation étant déterminé après que chacun des modules de visée a amené chacun des rayons lumineux à atteindre la zone prédéterminée de la cible, l'angle de déviation correspondant à un angle entre la partie du rayon réfléchie par le plan réfléchissant du dispositif de référence et l'axe de propagation,
- un module de détermination d'écart de phase, configuré pour déterminer des écarts de phase à partir des angles de déviation déterminés par les au moins deux modules de détermination d'angle de déviation, le module de détermination d'écart de phase étant configuré pour déterminer un front d'onde reconstitué à partir des angles de déviation, les écarts de phases étant déterminées par le module de détermination d'écart de phase en comparant le front d'onde reconstitué avec un front d'onde plan qui est parallèle au plan réfléchissant du dispositif de référence ;
- au moins deux modules d'ajustement, configurés pour ajuster chacune des sources lumineuses pour compenser les turbulences atmosphériques en fonction du front d'onde déterminés par le modules d détermination de front d'onde.

Ainsi, grâce à l'invention, il est possible, à la fois, de suivre la cible à atteindre et de compenser les effets des turbulences générées par l'atmosphère sans l'utilisation de boucles optiques complexes ou de calculs importants.

Avantageusement, chacun des collimateurs comprend au moins une pupille de sortie, chacun des collimateurs présentant un axe optique, l'axe optique faisant un angle non nul avec l'axe de propagation de façon que l'axe de propagation coupe l'axe optique au niveau de la pupille de sortie de chacun des collimateurs.

De façon non limitative, l'angle non nul présente une valeur supérieure à 0° et inférieure ou égale à 5°.

Selon un premier mode de réalisation, chacun des modules de visée comprend :
- une deuxième surface de détection configurée pour recevoir une image représentant la cible,
- une unité de repérage configurée pour repérer sur l'image de la cible reçue par la deuxième surface de détection une position de la zone prédéterminée à atteindre sur la cible par le rayon lumineux et une position courante de la zone atteinte par le rayon lumineux,
- une unité de calcul configurée pour calculer un déplacement à effectuer entre la position courante de la zone atteinte par le rayon lumineux et la position de la zone prédéterminée à atteindre sur la cible,
- une unité de déplacement configurée pour déplacer la source lumineuse pour que la position courante de la zone atteinte par le rayon lumineux soit superposée avec la position de la zone prédéterminée à atteindre, à partir du déplacement à effectuer calculé par l'unité de calcul.

Selon une première variante du premier mode de réalisation, le système comprend en outre une lame disposée dans l'axe de propagation, la lame présentant une surface configurée pour recevoir le rayon lumineux de la source lumineuse et pour recevoir l'image représentant la cible.
La surface est apte à transmettre le rayon lumineux de la source lumineuse et à réfléchir vers la deuxième surface de détection l'image représentant la cible.

Selon une deuxième variante du premier mode de réalisation, le système comprend en outre une lame disposée dans l'axe de propagation, la lame présentant une surface configurée pour recevoir le rayon lumineux de la source lumineuse et pour recevoir l'image représentant la cible.
La surface est apte à réfléchir le rayon lumineux de la source lumineuse et à transmettre vers la deuxième surface de détection l'image représentant la cible.

Selon un deuxième mode de réalisation, le système comprend en outre un dispositif laser de visée, configuré pour émettre un rayon laser de visée sur la zone prédéterminée à atteindre sur la cible.
Chacun des modules de visée comprend :
- une deuxième surface de détection configurée pour recevoir une image représentant une position du rayon laser de visée sur la cible et une position du rayon lumineux sur la cible,
- une unité de repérage configurée pour repérer sur l'image reçue par la deuxième surface de détection la position du rayon laser de visée sur la cible et la position courante du rayon lumineux sur la cible,
- une unité de calcul configurée pour calculer un déplacement à effectuer entre la position courante du rayon lumineux sur la cible et la position du rayon laser de visée sur la cible,
- une unité de déplacement configurée pour déplacer la source lumineuse pour que la position courante du rayon lumineux sur la cible soit superposée avec la position du rayon laser de visée sur la cible, à partir du déplacement à effectuer calculé par l'unité de calcul.

Selon une première variante du deuxième mode de réalisation, le système comprend en outre une lame disposée dans l'axe de propagation, la lame présentant une surface configurée pour recevoir le rayon lumineux de la source lumineuse et pour recevoir l'image représentant la position du rayon laser de visée sur la cible et la position du rayon lumineux sur la cible.
La surface est apte à transmettre le rayon lumineux de la source lumineuse et à réfléchir vers la deuxième surface de détection l'image représentant la position du rayon laser de visée sur la cible et la position du rayon lumineux sur la cible.

Selon une deuxième variante du deuxième mode de réalisation, comprend en outre une lame disposée dans l'axe de propagation, la lame présentant une surface configurée pour recevoir le rayon lumineux de la source lumineuse et pour recevoir l'image représentant la position du rayon laser de visée sur la cible et la position du rayon lumineux sur la cible.
La surface est apte à réfléchir le rayon lumineux de la source lumineuse et à transmettre vers la deuxième surface de détection l'image représentant la position du rayon laser de visée sur la cible et la position du rayon lumineux sur la cible.

L'invention concerne également un procédé d'utilisation du système de suivi d'une cible et de compensation de turbulences atmosphériques.

Selon l'invention, le procédé comprend les étapes suivantes, répétée de manière cyclique :
- une étape d'émission, mise en œuvre par chacune des sources lumineuses, consistant à émettre d'un rayon lumineux vers la cible selon un axe de propagation dans un sens d'émission,
- une étape de collimation des rayons lumineux, mise en œuvre par chacun des collimateurs, consistant à collimater chacun des rayons lumineux émis par chacune des sources lumineuses,
- une étape de visée, mise en œuvre par chacun des modules de visée, consistant à amener le rayon lumineux de la source lumineuse à atteindre une zone prédéterminée de la cible,
- une étape de détection, mise en œuvre par chacun des modules de détection, consistant à recevoir et détecter sur la première surface de détection la partie du rayon réfléchie par le plan réfléchissant du dispositif de référence à une position courante,
- une étape de détermination d'angle de déviation, mise en œuvre par chacun des modules de détermination d'angle de déviation, consistant à déterminer un angle de déviation à partir d'un décalage spatial sur la première surface de détection entre une position de référence sur la première surface de détection et la position courante, l'angle de déviation étant déterminé après que chacun des modules de visée a amené chacun des rayons lumineux à atteindre la zone prédéterminée de la cible, l'angle de déviation correspondant à un angle entre la partie du rayon réfléchie par le plan réfléchissant du dispositif de référence et l'axe de propagation,
- une étape de détermination d'écart de phase, mise en œuvre par le module de détermination d'écart de phase, consistant à déterminer des écarts de phase à partir des angles de déviation déterminés dans l'étape de détermination d'angle de déviation, l'étape de détermination d'écart de phase comprend la détermination d'un front d'onde reconstitué à partir des angles de déviation, les écarts de phases étant déterminées dans l'étape de détermination d'écart de phase en comparant le front d'onde reconstitué avec un front d'onde plan qui est parallèle au plan réfléchissant du dispositif de référence,
- une étape d'ajustement, mise en œuvre par chacun des modules d'ajustement, consistant à ajuster chacune des sources lumineuses pour compenser les turbulences atmosphériques en fonction des écarts de phase déterminés dans l'étape de détermination d'écart de phase.

Selon le premier mode de réalisation, l'étape de visée comprend les sous-étapes suivantes :
- une sous-étape de réception, mise en œuvre par une deuxième surface de détection, consistant à recevoir une image représentant la cible sur la deuxième surface de détection,
- une sous-étape de repérage, mise en œuvre par une unité de repérage, consistant à repérer sur l'image de la cible reçue par la deuxième surface de détection une position de la zone prédéterminée à atteindre sur la cible par le rayon lumineux et une position courante de la zone atteinte par le rayon lumineux,
- une sous-étape de calcul, mise en œuvre par une unité de calcul, consistant à calculer un déplacement à effectuer entre la position courante de la zone atteinte par le rayon lumineux et la position de la zone prédéterminée à atteindre sur la cible,
- une sous-étape de déplacement, mise en œuvre par une unité de déplacement, consistant à déplacer la source lumineuse pour que la position courante de la zone atteinte par le rayon lumineux soit superposée avec la position de la zone prédéterminée à atteindre, à partir du déplacement à effectuer calculé par l'unité de calcul.

Selon le deuxième mode de réalisation, l'étape de visée comprend les sous-étapes suivantes :
- une sous-étape d'émission, mise en œuvre par un dispositif laser de visée, consistant à émettre un rayon laser de visée sur la zone prédéterminée à atteindre sur la cible,
- une sous-étape de réception, mise en œuvre par une deuxième surface de détection, consistant à recevoir une image représentant une position du rayon laser de visée sur la cible et une position du rayon lumineux sur la cible,
- une sous-étape de repérage, mise en œuvre par une unité de repérage, consistant à repérer sur l'image reçue par la deuxième surface de détection la position du rayon laser de visée sur la cible et la position courante du rayon lumineux sur la cible,
- une sous-étape de calcul, mise en œuvre par une unité de calcul, consistant à calculer un déplacement à effectuer entre la position courante du rayon lumineux sur la cible et la position du rayon laser de visée sur la cible,
- une sous-étape de déplacement, mise en œuvre par une unité de déplacement, consistant à déplacer la source lumineuse pour que la position courante du rayon lumineux sur la cible soit superposée avec la position du rayon laser de visée sur la cible, à partir du déplacement à effectuer calculé par l'unité de calcul.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente une vue générale en perspective du système de suivi,
- la figure 2 représente une coupe transversale schématique du système de suivi,
- la figure 3 représente une partie du système de suivi selon un premier mode de réalisation,
- la figure 4 représente la même partie du système de suivi selon un deuxième mode de réalisation,
- la figure 5 représente schématiquement les étapes du procédé d'utilisation du système de suivi selon le premier mode de réalisation,
- la figure 6 représente schématiquement les étapes du procédé d'utilisation du système de suivi selon le deuxième mode de réalisation.

### DESCRIPTION DÉTAILLÉE

La suite de la description fera référence aux figures citées ci-dessus.

L'invention concerne un système 1 de suivi d'une cible 4 et de compensation de turbulences atmosphériques. Dans la suite de la description, le « système de suivi de cible et de compensation de turbulences atmosphériques » sera appelé le « système de suivi ».

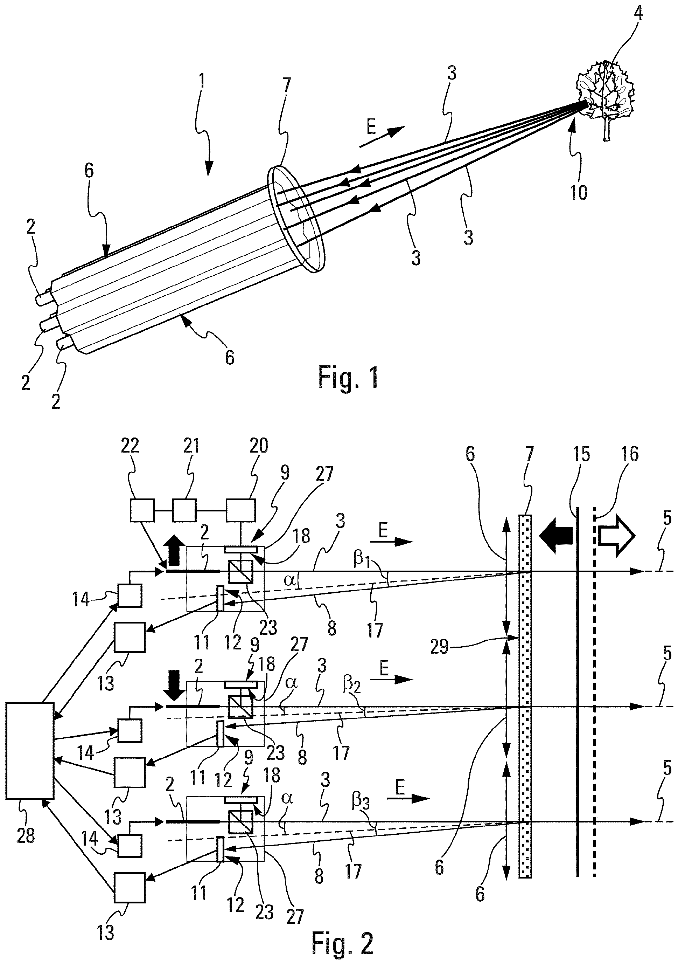

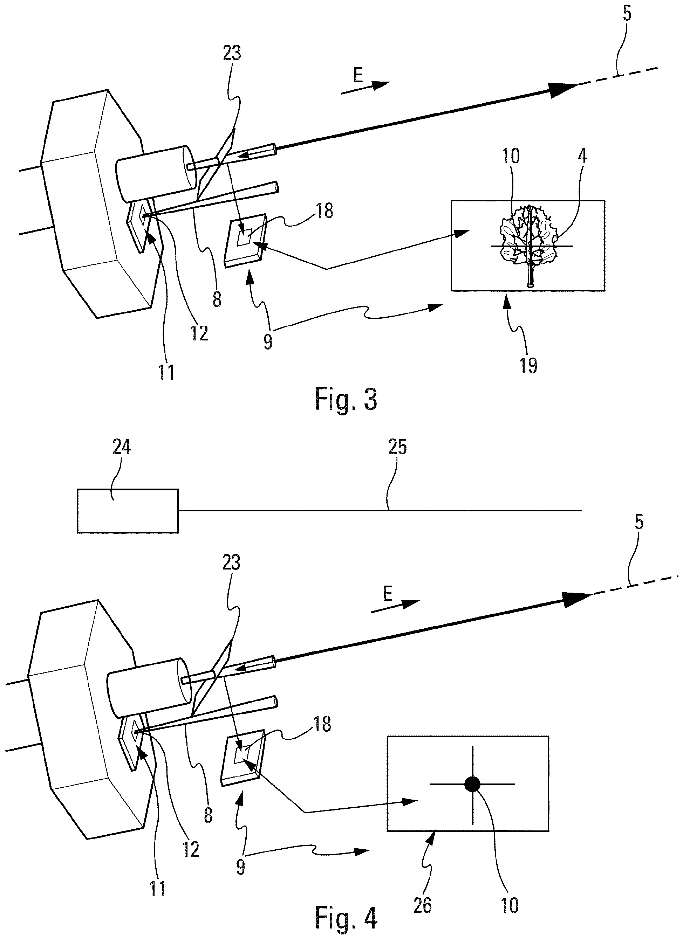

La cible 4 peut être cible mouvante ou une cible immobile. Par exemple, la cible peut être un avion de chasse ou un bâtiment. Sur les figures 1 et 3, la cible 4 correspond à un arbre.

Comme représenté sur les figures 1 et 2, le système de suivi 1 comprend au moins deux sources lumineuses 2, de préférence, une pluralité de sources lumineuses 2. Par exemple, plusieurs dizaines de sources lumineuses 2. Les sources lumineuses 2 sont configurées pour émettre chacune un rayon lumineux 3 vers la cible 4 selon la direction d'un axe de propagation 5 dans un sens d'émission représenté par la flèche référencée E.

De façon non limitative, chacune des sources lumineuses 2 peut être un laser, ou un émetteur d'une lumière directionnelle ou une extrémité d'une fibre optique qui transmet la lumière d'un laser ou une lumière directionnelle.

Le système de suivi 1 comprend en outre au moins deux collimateurs 6. Chacun des collimateurs 6 est associé respectivement à une des sources lumineuses 2. Chacun des collimateurs 6 est configuré pour collimater le rayon lumineux 3 de la source lumineuse 2 associée.

De préférence, chacune des sources lumineuses 2 est disposée dans le plan focal du collimateur 6 auquel elle est associée.

Avantageusement, chacun des collimateurs 6 comprend au moins une pupille de sortie et présente un axe optique 17. L'axe optique 17 fait un angle α non nul avec l'axe de propagation 5 de façon que l'axe de propagation 5 coupe l'axe optique 17 au niveau de la pupille de sortie de chacun des collimateurs 6.

De façon non limitative, l'angle α entre l'axe de propagation 5 et l'axe optique 17 présente une valeur supérieure à 0° et inférieure ou égale à 5°. De préférence, ledit angle α est compris entre 2° et 3°.

Le système de suivi 1 comprend également un dispositif de référence 7 disposé en aval de tous les collimateurs 6 dans le sens d'émission E. Le dispositif de référence 7 comprend un plan réfléchissant 29 configuré pour réfléchir une partie 8 du rayon lumineux 3 sortant de tous les collimateurs 6. La surface réfléchissante 29 du dispositif de référence 7 sert de référence commune à tous les collimateurs 6.

Selon un mode de réalisation, le plan réfléchissant 29 comporte une lame plane comprenant au moins une surface séparatrice apte à séparer chacun des rayons lumineux 3 sortant de chacun des collimateurs 6 en deux parties. La ou les surfaces séparatrices sont aptes à réfléchir une partie 8 du rayon lumineux 3 de chacun des collimateurs 6 et à transmettre le reste du rayon lumineux 3.

De façon non limitative, la ou les surfaces séparatrices présentent des taux de transmission du rayon lumineux 3 compris entre 99% et 99,9%.

Le système de suivi 1 comprend en outre au moins deux modules de visée 9. Chacun des modules de visée 9 est associé respectivement et de façon solidaire à une des sources lumineuses 2. Chacun des modules de visée 9 est configuré pour amener le rayon lumineux 3 de la source lumineuse 2 à atteindre une zone prédéterminée 10 de la cible 4.

Le système de suivi 1 comprend aussi au moins deux modules de détection 11. Chacun des modules de détection 11 est associé respectivement et de façon solidaire à une des sources lumineuses 2. Chacun des modules de détection 11 comprend une surface de détection 12 configurée pour recevoir la partie 8 du rayon lumineux 3 réfléchie par le plan réfléchissant 29 du dispositif de référence 7. La partie du rayon 8 réfléchie par le plan réfléchissant 29 est reçue et détectée sur la surface de détection 12 à une position courante.

L'expression « associé de façon solidaire à une des sources lumineuse » pour les modules de visée 9 et les modules de détection 11 signifie que ces modules 9 et 11 se déplacent en suivant le même déplacement que leur source lumineuse 2 respective. Par exemple, pour chacune des sources lumineuses 2, la source lumineuse 2, le module de visée 9 associé et le module de détection 11 associé sont fixés sur un même support pour former un ensemble optoélectronique unitaire 27. La source lumineuse 2 est alors configurée pour se déplacer par le déplacement du support sur lequel sont fixés le module de visée 9 associé et le module de détection 11 associé. Le module de visée 9 associé et le module de détection 11 associé suivent alors le même déplacement que la source lumineuse 2.

La distance respective entre la source lumineuse 2 et la surface de détection 12 du module de détection 11 associé est stable dans le temps quelles que soient des conditions d'environnement. De préférence, ce besoin est assuré grâce à une petite distance entre la source lumineuse 2 et la surface de détection 12 de chacun des modules de détection 11. Typiquement, cette distance est de l'ordre de quelques millimètres. De façon non limitative, cette distance est comprise entre 3 mm et 10 mm.

Selon un mode de réalisation, afin d'avoir une valeur de distance fiable et constante, la surface de détection 12 de chacun des modules de détection 11 peut être directement intégrée sur la vitre du carter d'un laser à travers laquelle sort le rayon laser.

Le système de suivi 1 comprend également au moins deux modules de détermination d'angle de déviation 13 en valeur absolue. Chacun des modules de détermination d'angle de déviation 13 est associé respectivement à une des sources lumineuses 2. Chacun des modules de détermination 13 est configuré pour déterminer respectivement un angle de déviation β₁, β₂, β₃ à partir d'un décalage spatial sur la surface de détection 12 entre une position de référence sur la surface de détection 12 et la position courante. L'angle de déviation β₁, β₂, β₃ est déterminé respectivement par chacun des modules de détection 11 après que chacun des modules de visée 9 a amené chacun des rayons lumineux 3 à atteindre la zone prédéterminée 10 de la cible 4.

L'angle de déviation β₁, β₂, β₃ correspond à un angle entre la partie du rayon 8 réfléchie par la plan réfléchissant 29 du dispositif de référence 7 et l'axe de propagation 5.

Le système de suivi 1 comprend aussi un module de détermination d'écart de phase 28, configuré pour déterminer des écarts de phase à partir des angles de déviation β₁, β₂, β₃ déterminés par les au moins deux modules de détermination d'angle de déviation 13. Ainsi, chacun des modules de détermination d'angle de déviation 13 envoie au module de détermination d'écart de phase 28 un signal représentatif de l'angle de déviation qu'il a déterminé.

Pour cela, le module de détermination d'écart de phase 28 est configuré pour déterminer un front d'onde reconstitué à partir des angles de déviation β₁, β₂, β₃. Les écarts de phases sont déterminées par le module de détermination d'écart de phase 28 en comparant le front d'onde reconstitué avec un front d'onde plan qui est parallèle au plan réfléchissant 29 du dispositif de référence 7. La comparaison consiste à déterminer la distance entre le front d'onde reconstitué et le front du front d'onde plan au droit de chaque collimateur 6. Ainsi, l'ensemble des modules de détermination 13 permettent au module de détermination d'écart de phase 28 de reconstituer un front d'onde 15 formé par les rayons lumineux 3.

L'objectif du système de suivi 1 est donc de faire en sorte que, d'une part, les fronts d'onde 15 provenant de la cible 4 qui portent les informations des turbulences (ou distorsions) atmosphériques et, d'autre part, les fronts d'onde 16 sortant des collimateurs 6 qui reproduisent les turbulences atmosphériques soient toujours les mêmes fronts d'onde. En d'autres termes, le système de suivi 1 permet que le front d'onde 16 sortant des collimateurs 6 soit en permanence asservi sur le front d'onde 15 provenant de la cible 4.

Le système de suivi 1 utilise ainsi le principe de l'analyseur de front d'onde de Shack-Hartmann dans lequel le décalage entre une position de référence d'un rayon lumineux et une position courant du rayon lumineux est représentatif de l'écart de phase entre une phase de référence correspondant à la phase un rayon lumineux arrivant à la position de référence et une phase courante correspondant à la phase d'un rayon lumineux arrivant à la position courante.

Au moins deux modules d'ajustement 14 font partie du système de suivi 1. Chacun des modules de d'ajustement 14 est associé respectivement à une des sources lumineuses 2. Chacun des modules d'ajustement 14 est configuré pour ajuster chacune des sources lumineuses 2 afin de compenser les turbulences atmosphériques en fonction des écarts de phases déterminés par le module de détermination d'écart de phase 28. Ainsi, le module de détermination d'écart de phase 28 envoie à chacun des modules d'ajustement 14 un signal représentatif d'un écart de phase afin que chacun des modules d'ajustement 14 ajustent la phase des sources lumineuses 2. Chacun des modules d'ajustement 14 calculent ainsi un déplacement à effectuer par sa source lumineuse 2 associée en fonction du signal représentatif d'écart de phase qu'il a reçu du module de détermination d'écart de phase 28. L'expression « compenser les turbulences atmosphériques » signifie que les effets des turbulences atmosphériques sont annulés lors de la propagation du ou des rayons lumineux.

Sur la figure 2, le front d'onde 15 représente le front d'onde dont la forme est déterminée par le module de détermination d'écart de phase à partir des angles de variation β₁, β₂, β₃. Le front d'onde 16 (également représenté sur la figure 2) représente le front d'onde après ajustement des sources lumineuses 2.

Selon une première configuration (figure 2), chacun des modules de visée 9 comprend :
- une surface de détection 18 configurée pour recevoir une image 19 représentant la cible 4,
- une unité de repérage 20 configurée pour repérer sur l'image 19 de la cible 4 reçue par la surface de détection 18 une position de la zone prédéterminée 10 à atteindre sur la cible 4 par le rayon lumineux 3 et une position courante de la zone atteinte par le rayon lumineux 3,
- une unité de calcul 21 configurée pour calculer un déplacement à effectuer entre la position courante de la zone atteinte par le rayon lumineux 3 et la position de la zone prédéterminée 10 à atteindre sur la cible 4,
- une unité de déplacement 22 configurée pour déplacer la source lumineuse 2 pour que la position courante de la zone atteinte par le rayon lumineux 3 soit superposée avec la position de la zone prédéterminée 10 à atteindre, à partir du déplacement à effectuer calculé par l'unité de calcul 21.

Par souci de clarté, la figure 2 représente les unités 20, 21 et 22 pour seulement un module de visée 9. On comprendra cependant que chacun des modules de visée 9 comprend ces unités 20, 21 et 22.

Selon une première variante du premier mode de réalisation, le système de suivi 1 comprend en outre une lame 23 disposée dans l'axe de propagation 5. La lame 23 présente une surface configurée pour recevoir le rayon lumineux 3 de la source lumineuse 2 et pour recevoir l'image 19 représentant la cible 4. Ladite surface est apte à transmettre le rayon lumineux 3 de la source lumineuse 2 et à réfléchir, vers la surface de détection 18, l'image 19 représentant la cible 4.

Selon une deuxième variante du premier mode de réalisation, la lame 23 présente une surface apte à réfléchir le rayon lumineux 3 de la source lumineuse 2 et à transmettre, vers la surface de détection 18, l'image 19 représentant la cible.

Selon un deuxième mode de réalisation (figure 4), le système de suivi 1 comprend en outre un dispositif laser de visée 24, configuré pour émettre un rayon laser de visée 25 sur la zone prédéterminée 10 à atteindre sur la cible 4. Le rayon laser de visée 25 peut être émis d'une source laser disposée au sol ou à bord d'un aéronef.

Dans ce deuxième mode de réalisation, chacun des modules de visée 9 comprend :
- une surface de détection 18 configurée pour recevoir une image 26 représentant une position du rayon laser de visée 25 sur la cible 4 et une position du rayon lumineux 3 sur la cible 4,
- une unité de repérage 20 configurée pour repérer sur l'image 26 reçue par la surface de détection 18 la position du rayon laser de visée sur la cible 4 et la position courante du rayon lumineux 3 sur la cible 4,
- une unité de calcul 21 configurée pour calculer un déplacement à effectuer entre la position courante du rayon lumineux 3 sur la cible 4 et la position du rayon laser de visée 25 sur la cible 4,
- une unité de déplacement 22 configurée pour déplacer la source lumineuse 2 pour que la position courante du rayon lumineux 3 sur la cible 4 soit superposée avec la position du rayon laser de visée 25 sur la cible 4, à partir du déplacement à effectuer calculé par l'unité de calcul 21.

Selon une première variante du deuxième mode de réalisation, le système de suivi 1 comprend en outre une lame 23 disposée dans l'axe de propagation 5. La lame 23 présentant une surface configurée pour recevoir le rayon lumineux 3 de la source lumineuse 2 et pour recevoir l'image 26 représentant la position du rayon laser de visée 25 sur la cible 4 et la position du rayon lumineux 3 sur la cible 4. Ladite surface est apte à transmettre le rayon lumineux 3 de la source lumineuse 2 et à réfléchir, vers la surface de détection 18, l'image 26 représentant la position du rayon laser de visée 25 sur la cible 4 et la position du rayon lumineux 3 sur la cible 4.

Selon une deuxième variante du deuxième mode de réalisation, ladite surface est apte à réfléchir le rayon lumineux 3 de la source lumineuse 2 et à transmettre, vers la surface de détection 18, l'image 26 représentant la position du rayon laser de visée 25 sur la cible 4 et la position du rayon lumineux 3 sur la cible 4.

La surface de détection 12 et la surface de détection 18 peuvent correspondre à des surfaces matricielles. Par exemple, ces surfaces matricielles comprennent un capteur CCD ou CMOS matriciel et un module de traitement. Le module de traitement est apte à récupérer les signaux générés et envoyés par le capteur CCD ou CMOS pour générer un signal représentatif des positions décrites ci-dessus.

Selon un mode de réalisation, les surfaces matricielles comprennent un faisceau de fibres optiques aptes à transmettre les images 19, 26 et les positions à un capteur matriciel. Une extrémité de chaque fibre optique fait partie de la surface matricielle. Un module de traitement du signal est configuré pour récupérer les signaux générés et envoyés par le capteur matriciel. Le module de traitement du signal peut alors envoyer des signaux représentatifs des positions. Ce mode de réalisation permet de s'affranchir, par exemple, de perturbations électromagnétiques induites par le câblage électrique que pourrait subir le capteur matriciel.

Selon une configuration, les positions correspondent à des coordonnées déterminées par rapport à un repère virtuel défini sur les surfaces de détection 12, 18. Par exemple, l'origine du repère est au centre de la surface de détection 12, 18.

Un pixel du CCD ou du CMOS peut correspondre à une unité de coordonnée.

Pour le premier mode de réalisation (figure 3) et pour le deuxième mode de réalisation (figure 4), de la même manière que celle de la surface de détection 12, la distance respective entre la source lumineuse 2 et la surface de détection 18 du module de visée 9 associé est stable dans le temps quelles que soient des conditions d'environnement. De préférence, ce besoin est assuré grâce à une petite distance entre la source lumineuse 2 et la surface de détection 18 de chacun des modules de visée 9. Typiquement, cette distance est de l'ordre de quelques millimètres. De façon non limitative, cette distance est comprise entre 3 mm et 10 mm.

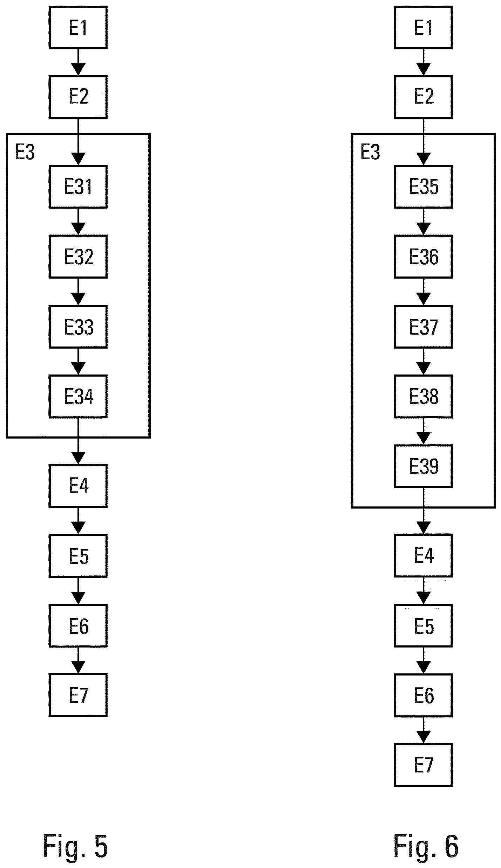

L'invention concerne également un procédé d'utilisation du système de suivi 1 (figures 5 et 6).

Le procédé d'utilisation comprend les étapes suivantes, répétées de manière cyclique :
- une étape E1 d'émission, mise en œuvre par chacune des sources lumineuses 2, consistant à émettre d'un rayon lumineux 3 vers la cible 4 selon l'axe de propagation 5 dans le sens d'émission E,
- une étape E2 de collimation des sources lumineuses 2, mise en œuvre par chacun des collimateurs 6, consistant à collimater chacun des rayons lumineux 3 émis par chacune des sources lumineuses 2,
- une étape E3 de visée, mise en œuvre par chacun des modules de visée 9, consistant à amener le rayon lumineux 3 de la source lumineuse 2 à atteindre la zone prédéterminée 10 de la cible 4,
- une étape E4 de détection, mise en œuvre par chacun des modules de détection 11, consistant à recevoir et détecter sur la première surface de détection 12 la partie du rayon 8 réfléchie par le plan réfléchissant 29 du dispositif de référence 7 à une position courante,
- une étape E5 de détermination d'angle de déviation, mise en œuvre par chacun des modules de détermination d'angle de déviation 13, consistant à déterminer un angle de déviation β₁, β₂, β₃ à partir d'un décalage spatial sur la première surface de détection 12 entre une position de référence sur la première surface de détection 12 et la position courante, l'angle de déviation β₁, β₂, β₃ étant déterminé après que chacun des modules de visée 9 a amené chacun des rayons lumineux 3 à atteindre la zone prédéterminée 10 de la cible 4, l'angle de déviation β₁, β₂, β₃ correspondant à un angle entre la partie du rayon 8 réfléchie par le plan réfléchissant 29 du dispositif de référence 7 et l'axe de propagation 5,
- une étape E6 de détermination d'écart de phase, mise en œuvre par le module de détermination d'écart de phase 28, consistant à déterminer des écarts de phase à partir des angles de déviation β₁, β₂, β₃ déterminés dans l'étape E5 de détermination d'angle de déviation,
- une étape E7 d'ajustement, mise en œuvre par chacun des modules d'ajustement 14, consistant à ajuster chacune des sources lumineuses 2 pour compenser les turbulences atmosphériques en fonction des écarts de phase déterminés dans l'étape E6 de détermination d'écart de phase 28..

Pour cela, l'étape E6 de détermination d'écart de phase comprend la détermination du front d'onde reconstitué à partir des angles de déviation β₁, β₂, β₃. Les écarts de phases étant déterminées dans l'étape E6 de détermination d'écart de phase en comparant le front d'onde reconstitué avec le front d'onde plan parallèle au plan réfléchissant 29 du dispositif de référence 7.

Selon le premier mode de réalisation (figure 5), l'étape E3 de visée comprend les sous-étapes suivantes :
- une sous-étape E31 de réception, mise en œuvre par la surface de détection 18, consistant à recevoir l'image 19 représentant la cible 4 sur la surface de détection 18,
- une sous-étape E32 de repérage, mise en œuvre par l'unité de repérage 20, consistant à repérer sur l'image 19 de la cible 4 reçue par la surface de détection 18 la position de la zone prédéterminée 10 à atteindre sur la cible 4 par le rayon lumineux 3 et la position courante de la zone atteinte par le rayon lumineux 3,
- une sous-étape E33 de calcul, mise en œuvre par l'unité de calcul 21, consistant à calculer le déplacement à effectuer entre la position courante de la zone atteinte par le rayon lumineux 3 et la position de la zone prédéterminée 10 à atteindre sur la cible 4,
- une sous-étape E34 de déplacement, mise en œuvre par l'unité de déplacement 22, consistant à déplacer la source lumineuse 2 pour que la position courante de la zone atteinte par le rayon lumineux 3 soit superposée avec la position de la zone prédéterminée 10 à atteindre, à partir du déplacement à effectuer calculé par l'unité de calcul 21.

Selon le deuxième mode de réalisation (figure 6), l'étape E3 de visée comprend les sous-étapes suivantes :
- une sous-étape E35 d'émission, mise en œuvre par le dispositif laser de visée 24, consistant à émettre le rayon laser de visée 25 sur la zone prédéterminée 10 à atteindre sur la cible 4,
- une sous-étape E36 de réception, mise en œuvre par la surface de détection 18, consistant à recevoir l'image 26 représentant la position du rayon laser de visée 25 sur la cible 4 et la position du rayon lumineux 3 sur la cible 4,
- une sous-étape E37 de repérage, mise en œuvre par l'unité de repérage 20, consistant à repérer sur l'image 26 reçue par la surface de détection 18 la position du rayon laser de visée 25 sur la cible 4 et la position courante du rayon lumineux 3 sur la cible 4,
- une sous-étape E38 de calcul, mise en œuvre par l'unité de calcul 21, consistant à calculer le déplacement à effectuer entre la position courante du rayon lumineux 3 sur la cible 4 et la position du rayon laser de visée 25 sur la cible 4,
- une sous-étape E39 de déplacement, mise en œuvre par l'unité de déplacement 22, consistant à déplacer la source lumineuse 2 pour que la position courante du rayon lumineux 3 sur la cible 4 soit superposée avec la position du rayon laser de visée 25 sur la cible 4, à partir du déplacement à effectuer calculé par l'unité de calcul 21.

## Revendications

1. Système de suivi d'une cible et de compensation de turbulences atmosphériques, comprenant
- au moins deux sources lumineuses (2) configurées pour émettre chacune un rayon lumineux (3) vers la cible (4) selon un axe de propagation (5) dans un sens d'émission (E),
- au moins deux collimateurs (6), chacun des collimateurs (6) étant associé respectivement à une des sources lumineuses (2), chacun des collimateurs (6) étant configuré pour collimater le rayon lumineux (3) de la source lumineuse (2) associée,
- un dispositif de référence (7) disposé en aval de tous les collimateurs (6) dans le sens d'émission (E), le dispositif de référence (7) comprenant un plan réfléchissant (29) configuré pour réfléchir une partie (8) du rayon lumineux (3) sortant de tous les collimateurs (6),
- au moins deux modules de visée (9), chacun des modules de visée (9) étant associé respectivement et de façon solidaire à une des sources lumineuses (2), chacun des modules de visée (9) étant configuré pour amener le rayon lumineux (3) de la source lumineuse (2) à atteindre une zone prédéterminée (10) de la cible (4) le système étant **caractérisé en ce qu'**il comprend :
- au moins deux modules de détection (11), chacun des modules de détection (11) étant associé respectivement et de façon solidaire à une des sources lumineuses (2), chacun des modules de détection (11) comprenant une première surface de détection (12) configurée pour recevoir la partie du rayon (8) réfléchie par le plan réfléchissant (29) du dispositif de référence (7), la partie du rayon (8) réfléchie par le plan réfléchissant (29) du dispositif de référence (7) étant reçue et détectée sur la première surface de détection (12) à une position courante,
- au moins deux modules de détermination d'angle de déviation (13), configurés pour déterminer respectivement un angle de déviation (β₁, β₂, β₃) à partir d'un décalage spatial sur la première surface de détection (12) entre une position de référence sur la première surface de détection (12) et la position courante, l'angle de déviation (β₁, β₂, β₃) étant déterminé après que chacun des modules de visée (9) a amené chacun des rayons lumineux (3) à atteindre la zone prédéterminée (10) de la cible (4), l'angle de déviation correspondant à un angle entre la partie du rayon (8) réfléchie par le plan réfléchissant (29) du dispositif de référence (7) et l'axe de propagation (5),
- un module de détermination d'écart de phase (28), configuré pour déterminer des écarts de phase à partir des angles de déviation (β₁, β₂, β₃) déterminés par les au moins deux modules de détermination d'angle de déviation (13), le module de détermination d'écart de phase (28) étant configuré pour déterminer un front d'onde reconstitué à partir des angles de déviation (β₁, β₂, β₃), les écarts de phases étant déterminées par le module de détermination d'écart de phase (28) en comparant le front d'onde reconstitué avec un front d'onde plan qui est parallèle au plan réfléchissant (29) du dispositif de référence (7) ;
- au moins deux modules d'ajustement (14), configurés pour ajuster chacune des sources lumineuses (2) afin de compenser les turbulences atmosphériques en fonction des écarts de phase déterminés par le module de détermination d'écart de phase (28).

2. Système selon la revendication 1,
**caractérisé en ce que** chacun des collimateurs (6) comprend au moins une pupille de sortie, chacun des collimateurs présentant un axe optique (17), l'axe optique (17) faisant un angle (a) non nul avec l'axe de propagation (5) de façon que l'axe de propagation (5) coupe l'axe optique (17) au niveau de la pupille de sortie de chacun des collimateurs (6).

3. Système selon la revendication 2,
**caractérisé en ce que** l'angle (a) non nul présente une valeur supérieure à 0° et inférieure ou égale à 5°.

4. Système selon l'une quelconque des revendications 1 à 3,
**caractérisé en ce que** chacun des modules de visée (9) comprend :
- une deuxième surface de détection (18) configurée pour recevoir une image (19) représentant la cible (4),
- une unité de repérage (20) configurée pour repérer sur l'image (19) de la cible (4) reçue par la deuxième surface de détection (18) une position de la zone prédéterminée (10) à atteindre sur la cible (4) par le rayon lumineux (3) et une position courante de la zone atteinte par le rayon lumineux (3),
- une unité de calcul (21) configurée pour calculer un déplacement à effectuer entre la position courante de la zone atteinte par le rayon lumineux (3) et la position de la zone prédéterminée (10) à atteindre sur la cible (4),
- une unité de déplacement (22) configurée pour déplacer la source lumineuse (2) pour que la position courante de la zone atteinte par le rayon lumineux (3) soit superposée avec la position de la zone prédéterminée (10) à atteindre, à partir du déplacement à effectuer calculé par l'unité de calcul (21).

5. Système selon la revendication 4,
**caractérisé en ce qu'**il comprend en outre une lame (23) disposée dans l'axe de propagation (5), la lame (23) présentant une surface configurée pour recevoir le rayon lumineux (3) de la source lumineuse (2) et pour recevoir l'image (19) représentant la cible (4),
et **en ce que** la surface est apte à transmettre le rayon lumineux (3) de la source lumineuse (2) et à réfléchir vers la deuxième surface de détection (18) l'image (19) représentant la cible (4).

6. Système selon la revendication 4,
**caractérisé en ce qu'**il comprend en outre une lame (23) disposée dans l'axe de propagation (5), la lame (23) présentant une surface configurée pour recevoir le rayon lumineux (3) de la source lumineuse (2) et pour recevoir l'image (19) représentant la cible (4),
et **en ce que** la surface est apte à réfléchir le rayon lumineux (3) de la source lumineuse (2) et à transmettre vers la deuxième surface de détection (18) l'image (19) représentant la cible (4).

7. Système selon l'une quelconque des revendications 1 à 3,
**caractérisé en ce qu'**il comprend en outre un dispositif laser de visée (24), configuré pour émettre un rayon laser de visée (25) sur la zone prédéterminée (10) à atteindre sur la cible (4),
et **en ce que** chacun des modules de visée (9) comprend :
- une deuxième surface de détection (18) configurée pour recevoir une image (26) représentant une position du rayon laser de visée (24) sur la cible et une position du rayon lumineux (3) sur la cible (4),
- une unité de repérage (20) configurée pour repérer sur l'image (26) reçue par la deuxième surface de détection (18) la position du rayon laser de visée (25) sur la cible (4) et la position courante du rayon lumineux (3) sur la cible (4),
- une unité de calcul (21) configurée pour calculer un déplacement à effectuer entre la position courante du rayon lumineux (3) sur la cible (4) et la position du rayon laser de visée (25) sur la cible (4),
- une unité de déplacement (22) configurée pour déplacer la source lumineuse (2) pour que la position courante du rayon lumineux (3) sur la cible soit superposée avec la position du rayon laser de visée (25) sur la cible, à partir du déplacement à effectuer calculé par l'unité de calcul (21).

8. Système selon la revendication 7,
**caractérisé en ce qu'**il comprend en outre une lame (23) disposée dans l'axe de propagation (5), la lame (23) présentant une surface configurée pour recevoir le rayon lumineux (3) de la source lumineuse (2) et pour recevoir l'image (26) représentant la position du rayon laser de visée (25) sur la cible et la position du rayon lumineux (3) sur la cible,
et **en ce que** la surface est apte à transmettre le rayon lumineux (3) de la source lumineuse (2) et à réfléchir vers la deuxième surface de détection (18) l'image (26) représentant la position du rayon laser de visée (25) sur la cible et la position du rayon lumineux (3) sur la cible.

9. Système selon la revendication 7,
**caractérisé en ce qu'**il comprend en outre une lame (23) disposée dans l'axe de propagation (5), la lame (23) présentant une surface configurée pour recevoir le rayon lumineux (3) de la source lumineuse (2) et pour recevoir l'image (26) représentant la position du rayon laser de visée (25) sur la cible et la position du rayon lumineux (3) sur la cible,
et **en ce que** la surface est apte à réfléchir le rayon lumineux (3) de la source lumineuse (2) et à transmettre vers la deuxième surface de détection (18) l'image (26) représentant la position du rayon laser de visée (25) sur la cible et la position du rayon lumineux (3) sur la cible.

10. Procédé d'utilisation du système de suivi (1) d'une cible (4) et de compensation de turbulences atmosphériques selon l'une quelconque des revendications 1 à 9,
**caractérisé en ce qu'**il comprend les étapes suivantes, répétées de manière cyclique :
- une étape (E1) d'émission, mise en œuvre par chacune des sources lumineuses (2), consistant à émettre d'un rayon lumineux (3) vers la cible (4) selon un axe de propagation (5) dans un sens d'émission (E),
- une étape (E2) de collimation des rayons lumineux (3), mise en œuvre par chacun des collimateurs (6), consistant à collimater chacun des rayons lumineux (3) émis par chacune des sources lumineuses (2),
- une étape (E3) de visée, mise en œuvre par chacun des modules de visée (9), consistant à amener le rayon lumineux (3) de la source lumineuse (2) à atteindre une zone prédéterminée (10) de la cible (4),
- une étape (E4) de détection, mise en œuvre par chacun des modules de détection (11), consistant à recevoir et détecter sur la première surface de détection (12) la partie du rayon (8) réfléchie par le plan réfléchissant (29) du dispositif de référence (7) à une position courante,
- une étape (E5) de détermination d'angle de déviation, mise en œuvre par chacun des modules de détermination d'angle de déviation (13), consistant à déterminer un angle de déviation (β₁, β₂, β₃) à partir d'un décalage spatial sur la première surface de détection (12) entre une position de référence sur la première surface de détection (12) et la position courante, l'angle de déviation (β₁, β₂, β₃) étant déterminé après que chacun des modules de visée (9) a amené chacun des rayons lumineux (3) à atteindre la zone prédéterminée (10) de la cible (4), l'angle de déviation (β₁, β₂, β₃) correspondant à un angle entre la partie du rayon (8) réfléchie par le plan réfléchissant (29) du dispositif de référence (7) et l'axe de propagation (5),
- une étape (E6) de détermination d'écart de phase, mise en œuvre par le module de détermination d'écart de phase (28), consistant à déterminer des écarts de phase à partir des angles de déviation (β₁, β₂, β₃) déterminés dans l'étape (E5) de détermination d'angle de déviation, l'étape (E6) de détermination d'écart de phase comprenant la détermination d'un front d'onde reconstitué à partir des angles de déviation (β₁, β₂, β₃), les écarts de phases étant déterminées dans l'étape (E6) de détermination d'écart de phase en comparant le front d'onde reconstitué avec un front d'onde plan qui est parallèle au plan réfléchissant (29) du dispositif de référence (7)
- une étape (E7) d'ajustement, mise en œuvre par chacun des modules d'ajustement (14), consistant à ajuster chacune des sources lumineuses (2) pour compenser les turbulences atmosphériques en fonction des écarts de phase déterminés dans l'étape (E6) de détermination d'écart de phase (28).

11. Procédé selon la revendication 10,
**caractérisé en ce que** l'étape (E3) de visée comprend les sous-étapes suivantes :
- une sous-étape (E31) de réception, mise en œuvre par une deuxième surface de détection (18), consistant à recevoir une image (19) représentant la cible (4) sur la deuxième surface de détection (18),
- une sous-étape (E32) de repérage, mise en œuvre par une unité de repérage (20), consistant à repérer sur l'image (19) de la cible (4) reçue par la deuxième surface de détection (18) une position de la zone prédéterminée (10) à atteindre sur la cible (4) par le rayon lumineux (3) et une position courante de la zone atteinte par le rayon lumineux (3),
- une sous-étape (E33) de calcul, mise en œuvre par une unité de calcul (21), consistant à calculer un déplacement à effectuer entre la position courante de la zone atteinte par le rayon lumineux (3) et la position de la zone prédéterminée (10) à atteindre sur la cible (4),
- une sous-étape (E34) de déplacement, mise en œuvre par une unité de déplacement (22), consistant à déplacer la source lumineuse (2) pour que la position courante de la zone atteinte par le rayon lumineux (3) soit superposée avec la position de la zone prédéterminée (10) à atteindre, à partir du déplacement à effectuer calculé par l'unité de calcul (21).

12. Procédé selon la revendication 10,
**caractérisé en ce que** l'étape de visée (E3) comprend les sous-étapes suivantes :
- une sous-étape (E35) d'émission, mise en œuvre par un dispositif laser de visée (24), consistant à émettre un rayon laser de visée (25) sur la zone prédéterminée (10) à atteindre sur la cible (4),
- une sous-étape (E36) de réception, mise en œuvre par une deuxième surface de détection (18), consistant à recevoir une image (26) représentant une position du rayon laser de visée (25) sur la cible (4) et une position du rayon lumineux (3) sur la cible (4),
- une sous-étape (E37) de repérage, mise en œuvre par une unité de repérage (20), consistant à repérer sur l'image (26) reçue par la deuxième surface de détection (18) la position du rayon laser de visée (25) sur la cible (4) et la position courante du rayon lumineux (3) sur la cible (4),
- une sous-étape (E38) de calcul, mise en œuvre par une unité de calcul (21), consistant à calculer un déplacement à effectuer entre la position courante du rayon lumineux (3) sur la cible (4) et la position du rayon laser de visée (25) sur la cible (4),
- une sous-étape (E39) de déplacement, mise en œuvre par une unité de déplacement (22), consistant à déplacer la source lumineuse (2) pour que la position courante du rayon lumineux (3) sur la cible (4) soit superposée avec la position du rayon laser de visée (25) sur la cible (4), à partir du déplacement à effectuer calculé par l'unité de calcul (21).

## Patentansprüche

1. System zur Verfolgung eines Ziels und zur Kompensierung von atmosphärischen Turbulenzen, umfassend:
- mindestens zwei Lichtquellen (2), die so eingerichtet sind, dass sie jeweils einen Lichtstrahl (3) in einer Emissionsrichtung (E) auf einer Ausbreitungsachse (5) zum Ziel (4) aussenden,
- mindestens zwei Kollimatoren (6), wobei jeder der Kollimatoren (6) jeweils mit einer der Lichtquellen (2) verbunden ist, wobei jeder der Kollimatoren (6) so eingerichtet ist, dass er den Lichtstrahl (3) der zugehörigen Lichtquelle (2) parallel richtet,
- eine Bezugsvorrichtung (7), die in der Emissionsrichtung (E) nach sämtlichen Kollimatoren (6) angeordnet ist, wobei die Bezugsvorrichtung (7) eine Reflektorebene (29) umfasst, die so eingerichtet ist, dass sie einen Teil (8) des Lichtstrahls (3) reflektiert, der aus sämtlichen Kollimatoren (6) austritt,
- mindestens zwei Zielmodule (9), wobei jedes der Zielmodule (9) jeweils und fest einer der Lichtquellen (2) zugeordnet ist, wobei jedes der Zielmodule (9) so eingerichtet ist, dass es den Lichtstrahl (3) der Lichtquelle (2) so führt, dass er einen vorgegebenen Bereich (10) des Ziels (4) erreicht, wobei das System **dadurch gekennzeichnet ist, dass** es Folgendes umfasst:
- mindestens zwei Erfassungsmodule (11), wobei jedes der Erfassungsmodule (11) jeweils und fest einer der Lichtquellen (2) zugeordnet ist, wobei jedes der Erfassungsmodule (11) eine erste Erfassungsfläche (12) umfasst, die so eingerichtet ist, dass sie den Teil des Strahls (8) empfängt, der von der Reflektorebene (29) der Bezugsvorrichtung (7) reflektiert wird, wobei der Teil des Strahls (8), der von der Reflektorebene (29) der Bezugsvorrichtung (7) reflektiert wird, bei einer gegenwärtigen Position auf der ersten Erfassungsfläche (12) empfangen und erfasst wird,
- mindestens zwei Module zur Ablenkwinkelbestimmung (13), die so eingerichtet sind, dass sie jeweils einen Ablenkwinkel (β₁, β₂, β₃) aus einem räumlichen Versatz auf der ersten Erfassungsfläche (12) zwischen einer Bezugsposition auf der ersten Erfassungsfläche (12) und der gegenwärtigen Position bestimmen, wobei der Ablenkwinkel (β₁, β₂, β₃) bestimmt wird, nachdem jedes der Zielmodule (9) jeden der Lichtstrahlen (3) so geführt hat, dass sie den vorgegebenen Bereich (10) des Ziels (4) erreichen, wobei der Ablenkwinkel einem Winkel zwischen dem Teil des Strahls (8), der von der Reflektorebene (29) der Bezugsvorrichtung (7) reflektiert wird, und der Ausbreitungsachse (5) entspricht,
- ein Modul zur Bestimmung der Phasenabweichung (28), das so eingerichtet ist, dass es Phasenabweichungen anhand der Ablenkwinkel (β₁ β₂, β₃) bestimmt, die von den mindestens zwei Modulen zur Ablenkwinkelbestimmung (13) bestimmt werden, wobei das Modul zur Bestimmung der Phasenabweichung (28) so eingerichtet ist, dass es eine Wellenfront bestimmt, die anhand der Ablenkwinkel (β₁, β₂, β₃) neu gebildet wird, wobei die Phasenabweichungen von dem Modul zur Bestimmung der Phasenabweichung (28) bestimmt werden, indem die neugebildete Wellenfront mit einer ebenen Wellenfront verglichen wird, die parallel zur Reflektorebene (29) der Bezugsvorrichtung (7) verläuft;
- mindestens zwei Einstellmodule (14), die so eingerichtet sind, dass sie jede der Lichtquellen (2) einstellen, um atmosphärische Turbulenzen in Abhängigkeit von den Phasenabweichungen zu kompensieren, die von dem Modul zur Bestimmung der Phasenabweichung (28) bestimmt werden.

2. System nach Anspruch 1,
**dadurch gekennzeichnet, dass** jeder der Kollimatoren (6) mindestens eine Austrittspupille umfasst, wobei jeder der Kollimatoren eine optische Achse (17) aufweist, wobei die optische Achse (17) einen von Null abweichenden Winkel (a) mit der Ausbreitungsachse (5) bildet, sodass die Ausbreitungsachse (5) die optische Achse (17) bei der Austrittspupille von jedem der Kollimatoren (6) schneidet.

3. System nach Anspruch 2,
**dadurch gekennzeichnet, dass** der von Null abweichende Winkel (a) einen Wert von über 0° und kleiner oder gleich 5° aufweist.

4. System nach einem der Ansprüche 1 bis 3,
**dadurch gekennzeichnet, dass** jedes der Zielmodule (9) umfasst:
- eine zweite Erfassungsfläche (18), die so eingerichtet ist, dass sie ein Bild (19) empfängt, das das Ziel (4) darstellt,
- eine Markierungseinheit (20), die so eingerichtet ist, dass sie auf dem Bild (19) des Ziels (4), das von der zweiten Erfassungsfläche (18) empfangen wird, eine Position des von dem Lichtstrahl (3) am Ziel (4) zu erreichenden vorgegebenen Bereichs (10) und eine gegenwärtige Position des von dem Lichtstrahl (3) erreichten Bereichs markiert,
- eine Recheneinheit (21), die so eingerichtet ist, dass sie eine Bewegung berechnet, die zwischen der gegenwärtigen Position des von dem Lichtstrahl (3) erreichten Bereichs und der Position des am Ziel (4) zu erreichenden vorgegebenen Bereichs (10) vorgenommen werden soll,
- eine Bewegungseinheit (22), die so eingerichtet ist, dass sie die Lichtquelle (2) ausgehend von der vorzunehmenden Bewegung, die von der Recheneinheit (21) berechnet wird, bewegt, damit die gegenwärtige Position des von dem Lichtstrahl (3) erreichten Bereichs und die Position des zu erreichenden vorgegebenen Bereichs (10) übereinanderliegen.

5. System nach Anspruch 4,
**dadurch gekennzeichnet, dass** es weiter eine Platte (23) umfasst, die auf der Ausbreitungsachse (5) angeordnet ist, wobei die Platte (23) eine Fläche aufweist, die so eingerichtet ist, dass sie den Lichtstrahl (3) der Lichtquelle (2) empfängt und dass sie das Bild (19) empfängt, das das Ziel (4) darstellt,
und dadurch, dass die Fläche in der Lage ist, den Lichtstrahl (3) der Lichtquelle (2) hindurchzulassen und das Bild (19), das das Ziel (4) darstellt, zur zweiten Erfassungsfläche (18) zu reflektieren.

6. System nach Anspruch 4,
**dadurch gekennzeichnet, dass** es weiter eine Platte (23) umfasst, die auf der Ausbreitungsachse (5) angeordnet ist, wobei die Platte (23) eine Fläche aufweist, die so eingerichtet ist, dass sie den Lichtstrahl (3) der Lichtquelle (2) empfängt und dass sie das Bild (19) empfängt, das das Ziel (4) darstellt,
und dadurch, dass die Fläche in der Lage ist, den Lichtstrahl (3) der Lichtquelle (2) zu reflektieren und das Bild (19), das das Ziel (4) darstellt, auf die zweite Erfassungsfläche (18) zu übertragen.

7. System nach einem der Ansprüche 1 bis 3,
**dadurch gekennzeichnet, dass** es weiter eine Ziellaservorrichtung (24) umfasst, die so eingerichtet ist, dass sie einen Ziellaserstrahl (25) auf den am Ziel (4) zu erreichenden vorgegebenen Bereich (10) aussendet,
und dadurch, dass jedes der Zielmodule (9) umfasst:
- eine zweite Erfassungsfläche (18), die so eingerichtet ist, dass sie ein Bild (26) empfängt, das eine Position des Ziellaserstrahls (24) am Ziel und eine Position des Lichtstrahls (3) am Ziel (4) darstellt,
- eine Markierungseinheit (20), die so eingerichtet ist, dass sie auf dem Bild (26), das von der zweiten Erfassungsfläche (18) empfangen wird, die Position des Ziellaserstrahls (25) am Ziel (4) und die gegenwärtige Position des Laserstrahls (3) am Ziel (4) markiert,
- eine Recheneinheit (21), die so eingerichtet ist, dass sie eine Bewegung berechnet, die zwischen der gegenwärtigen Position des Lichtstrahls (3) am Ziel (4) und der Position des Ziellaserstrahls (25) am Ziel (4) vorgenommen werden soll,
- eine Bewegungseinheit (22), die so eingerichtet ist, dass sie die Lichtquelle (2) ausgehend von der vorzunehmenden Bewegung, die von der Recheneinheit (21) berechnet wird, bewegt, damit die gegenwärtige Position des Lichtstrahls (3) am Ziel und die Position des Ziellaserstrahls (25) am Ziel übereinanderliegen.

8. System nach Anspruch 7,
**dadurch gekennzeichnet, dass** es weiter eine Platte (23) umfasst, die auf der Ausbreitungsachse (5) angeordnet ist, wobei die Platte (23) eine Fläche aufweist, die so eingerichtet ist, dass sie den Lichtstrahl (3) der Lichtquelle (2) empfängt und dass sie das Bild (26) empfängt, das die Position des Ziellaserstrahls (25) am Ziel und die Position des Lichtstrahls (3) am Ziel darstellt,
und dadurch, dass die Fläche in der Lage ist, den Lichtstrahl (3) der Lichtquelle (2) hindurchzulassen und das Bild (26), das die Position des Ziellaserstrahls (25) am Ziel und die Position des Lichtstrahls (3) am Ziel darstellt, zur zweiten Erfassungsfläche (18) zu reflektieren.

9. System nach Anspruch 7,
**dadurch gekennzeichnet, dass** es weiter eine Platte (23) umfasst, die auf der Ausbreitungsachse (5) angeordnet ist, wobei die Platte (23) eine Fläche aufweist, die so eingerichtet ist, dass sie den Lichtstrahl (3) der Lichtquelle (2) empfängt und dass sie das Bild (26) empfängt, das die Position des Ziellaserstrahls (25) am Ziel und die Position des Lichtstrahls (3) am Ziel darstellt,
und dadurch, dass die Fläche in der Lage ist, den Lichtstrahl (3) der Lichtquelle (2) zu reflektieren und das Bild (26), das die Position des Ziellaserstrahls (25) am Ziel und die Position des Lichtstrahls (3) am Ziel darstellt, auf die zweite Erfassungsfläche (18) zu übertragen.

10. Verfahren zur Verwendung des Systems zur Verfolgung (1) eines Ziels (4) und zur Kompensierung von atmosphärischen Turbulenzen nach einem der Ansprüche 1 bis 9,
**dadurch gekennzeichnet, dass** es die folgenden Schritte umfasst, die periodisch wiederholt werden:
- einen Schritt (E1) zum Aussenden, der mit jeder der Lichtquellen (2) durchgeführt wird und darin besteht, einen Lichtstrahl (3) in einer Emissionsrichtung (E) auf einer Ausbreitungsachse (5) zum Ziel (4) auszusenden,
- einen Schritt (E2) zum Parallelrichten der Lichtstrahlen (3), der mit jedem der Kollimatoren (6) durchgeführt wird und darin besteht, jeden der Lichtstrahlen (3) parallel zu richten, der von jeder der Lichtquellen (2) ausgesendet wird,
- einen Schritt (E3) zum Hinzielen, der mit jedem der Zielmodule (9) durchgeführt wird und darin besteht, den Lichtstrahl (3) der Lichtquelle (2) so zu führen, dass er einen vorgegebenen Bereich (10) des Ziels (4) erreicht,
- einen Schritt (E4) zum Erfassen, der mit jedem der Erfassungsmodule (11) durchgeführt wird und darin besteht, auf der ersten Erfassungsfläche (12) den Teil des Strahls (8), der von der Reflektorebene (29) der Bezugsvorrichtung (7) reflektiert wird, bei einer gegenwärtigen Position zu empfangen und zu erfassen,
- einen Schritt (E5) zur Ablenkwinkelbestimmung, der mit jedem der Module zur Ablenkwinkelbestimmung (13) durchgeführt wird und darin besteht, einen Ablenkwinkel (β₁, β₂, β₃) aus einem räumlichen Versatz auf der ersten Erfassungsfläche (12) zwischen einer Bezugsposition auf der ersten Erfassungsfläche (12) und der gegenwärtigen Position zu bestimmen, wobei der Ablenkwinkel (β₁, β₂, β₃) bestimmt wird, nachdem jedes der Zielmodule (9) jeden der Lichtstrahlen (3) so geführt hat, dass sie den vorgegebenen Bereich (10) des Ziels (4) erreichen, wobei der Ablenkwinkel (β₁ β₂, β₃) einem Winkel zwischen dem Teil des Strahls (8), der von der Reflektorebene (29) der Bezugsvorrichtung (7) reflektiert wird, und der Ausbreitungsachse (5) entspricht,
- einen Schritt (E6) zur Bestimmung der Phasenabweichung, der mit dem Modul zur Bestimmung der Phasenabweichung (28) durchgeführt wird und darin besteht, Phasenabweichungen anhand der Ablenkwinkel (β₁, β₂, β₃) zu bestimmen, die im Schritt (E5) zur Ablenkwinkelbestimmung bestimmt werden, wobei der Schritt (E6) zur Bestimmung der Phasenabweichung die Bestimmung einer Wellenfront umfasst, die anhand der Ablenkwinkel (β₁, β₂, β₃) neu gebildet wird, wobei die Phasenabweichungen in Schritt (E6) zur Bestimmung der Phasenabweichung bestimmt werden, indem die neugebildete Wellenfront mit einer ebenen Wellenfront verglichen wird, die parallel zur Reflektorebene (29) der Bezugsvorrichtung (7) verläuft,
- einen Schritt (E7) zum Einstellen, der mit jedem der Einstellmodule (14) durchgeführt wird und darin besteht, jede der Lichtquellen (2) einzustellen, damit atmosphärische Turbulenzen in Abhängigkeit von den Phasenabweichungen kompensiert werden, die in Schritt (E6) zur Bestimmung der Phasenabweichung (28) bestimmt werden.

11. Verfahren nach Anspruch 10,
**dadurch gekennzeichnet, dass** der Schritt (E3) zum Hinzielen die folgenden Teilschritte umfasst:
- einen Teilschritt (E31) zum Empfang, der mit einer zweiten Erfassungsfläche (18) durchgeführt wird und darin besteht, ein Bild (19), das das Ziel (4) darstellt, auf der zweiten Erfassungsfläche (18) zu empfangen,
- einen Teilschritt (E32) zum Markieren, der mit einer Markierungseinheit (20) durchgeführt wird und darin besteht, auf dem Bild (19) des Ziels (4), das von der zweiten Erfassungsfläche (18) empfangen wird, eine Position des von dem Lichtstrahl (3) am Ziel (4) zu erreichenden vorgegebenen Bereichs (10) und eine gegenwärtige Position des von dem Lichtstrahl (3) erreichten Bereichs zu markieren,
- einen Teilschritt (E33) zum Berechnen, der mit einer Recheneinheit (21) durchgeführt wird und darin besteht, eine Bewegung zu berechnen, die zwischen der gegenwärtigen Position des von dem Lichtstrahl (3) erreichten Bereichs und der Position des am Ziel (4) zu erreichenden vorgegebenen Bereichs (10) vorgenommen werden soll,
- einen Teilschritt (E34) zum Bewegen, der mit einer Bewegungseinheit (22) durchgeführt wird und darin besteht, die Lichtquelle (2) ausgehend von der vorzunehmenden Bewegung, die von der Recheneinheit (21) berechnet wird, zu bewegen, damit die gegenwärtige Position des von dem Lichtstrahl (3) erreichten Bereichs und die Position des zu erreichenden vorgegebenen Bereichs (10) übereinanderliegen.

12. Verfahren nach Anspruch 10,
**dadurch gekennzeichnet, dass** der Schritt (E3) zum Hinzielen die folgenden Teilschritte umfasst:
- einen Teilschritt (E35) zum Aussenden, der mit einer Ziellaservorrichtung (24) durchgeführt wird und darin besteht, einen Ziellaserstrahl (25) auf den am Ziel (4) zu erreichenden vorgegebenen Bereich (10) auszusenden,
- einen Teilschritt (E36) zum Empfangen, der mit einer zweiten Erfassungsfläche (18) durchgeführt wird und darin besteht, ein Bild (26) zu empfangen, das eine Position des Ziellaserstrahls (25) am Ziel (4) und eine Position des Lichtstrahls (3) am Ziel (4) darstellt,
- einen Teilschritt (E37) zum Markieren, der mit einer Markierungseinheit (20) durchgeführt wird und darin besteht, auf dem Bild (26), das von der zweiten Erfassungsfläche (18) empfangen wird, die Position des Ziellaserstrahls (25) am Ziel (4) und die gegenwärtige Position des Lichtstrahls (3) am Ziel (4) zu markieren,
- einen Teilschritt (E38) zum Berechnen, der mit einer Recheneinheit (21) durchgeführt wird und darin besteht, eine Bewegung zu berechnen, die zwischen der gegenwärtigen Position des Lichtstrahls (3) am Ziel (4) und der Position des Ziellaserstrahls (25) am Ziel (4) vorgenommen werden soll,
- einen Teilschritt (E39) zum Bewegen, der mit einer Bewegungseinheit (22) durchgeführt wird und darin besteht, die Lichtquelle (2) ausgehend von der vorzunehmenden Bewegung, die von der Recheneinheit (21) berechnet wird, zu bewegen, damit die gegenwärtige Position des Lichtstrahls (3) am Ziel (4) und die Position des Ziellaserstrahls (25) am Ziel (4) übereinanderliegen.

## Claims

1. System for tracking a target and for compensating for atmospheric turbulence,
comprising:
- at least two light sources (2) each configured to emit a light beam (3) to the target (4) along an axis of propagation (5) in an emission direction (E),
- at least two collimators (6), with each of the collimators (6) being respectively associated with one of the light sources (2), with each of the collimators (6) being configured to collimate the light beam (3) of the associated light source (2),
- a reference device (7) arranged downstream of all the collimators (6) in the emission direction (E), the reference device (7) comprising a reflecting plane (29) configured to reflect a portion (8) of the light beam (3) exiting from all the collimators (6),
- at least two targeting modules (9), with each of the targeting modules (9) being associated respectively and integrally with one of the light sources (2), with each of the targeting modules (9) being configured to lead the light beam (3) from the light source (2) to reach a predetermined zone (10) of the target (4),
the system being **characterized in that** it comprises:
- at least two detection modules (11), with each of the detection modules (11) being associated respectively and integrally with one of the light sources (2), with each of the detection modules (11) comprising a first detection surface (12) configured to receive the portion of the beam (8) reflected by the reflecting plane (29) of the reference device (7), the portion of the beam (8) reflected by the reflecting plane (29) of the reference device (7) being received and detected on the first detection surface (12) at a current position,
- at least two modules for determining an angle of deviation (13), configured to respectively determine an angle of deviation (β₁ β₂, β₃) from a spatial shift on the first detection surface (12) between a reference position on the first detection surface (12) and the current position, the angle of deviation (β₁ β₂, β₃) being determined after each of the targeting modules (9) has led each of the light beams (3) to reach the predetermined zone (10) of the target (4), with the angle of deviation corresponding to an angle between the portion of the beam (8) reflected by the reflecting plane (29) of the reference device (7) and the axis of propagation (5),
- a module for determining phase deviation (28), configured to determine phase deviations from angles of deviation (β₁ β₂, β₃) determined by the at least two modules for determining an angle of deviation (13), with the module for determining phase deviation (28) being configured to determine a wave front reconstituted from angles of deviation (β₁ β₂, β₃), the phase deviations being determined by the module for determining phase deviation (28) by comparing the reconstituted wave front with a plane wave front which is parallel to the reflecting plane (29) of the reference device (7);
- at least two adjustment modules (14), configured to adjust each of the light sources (2) in order to compensate for the atmospheric turbulence according to the phase deviations determined by the module for determining phase deviation (28).

2. System according to claim 1,
**characterised in that** each of the collimators (6) comprises at least one exit pupil, with each of the collimators having an optical axis (17), with the optical axis (17) forming a non-zero angle (α) with the axis of propagation (5) such that the axis of propagation (5) intersects the optical axis (17) on the exit pupil of each of the collimators (6).

3. System according to claim 2,
**characterised in that** the non-zero angle (α) has a value greater than 0° and less than or equal to 5°.

4. System according to any one of claims 1 to 3,
**characterised in that** each of the targeting modules (9) comprises:
- a second detection surface (18) configured to receive an image (19) that represents the target (4),
- a unit for locating (20) configured to locate on the image (19) of the target (4) received by the second detection surface (18) a position of the predetermined zone (10) to be reached on the target (4) by the light beam (3) and a current position of the zone reached by the light beam (3),
- a unit for calculating (21) configured to calculate a movement to be carried out between the current position of the zone reached by the light beam (3) and the position of the predetermined zone (10) to be reached on the target (4),
- a movement unit (22) configured to move the light source (2) such that the current position of the zone reached by the light beam (3) is superposed with the position of the predetermined zone (10) to be reached, from the movement to be carried out calculated by the unit for calculating (21).

5. System according to claim 4,
**characterised in that** it further comprises a plate (23) arranged in the axis of propagation (5), with the plate (23) having a surface configured to receive the light beam (3) from the light source (2) and to receive the image (19) that represents the target (4),
and **in that** the surface is capable of transmitting the light beam (3) from the light source (2) and to reflect towards the second detection surface (18) the image (19) that represents the target (4).

6. System according to claim 4,
**characterised in that** it further comprises a plate (23) arranged in the axis of propagation (5), with the plate (23) having a surface configured to receive the light beam (3) from the light source (2) and to receive the image (19) that represents the target (4),
and **in that** the surface is capable of reflecting the light beam (3) from the light source (2) and to transmit towards the second detection surface (18) the image (19) that represents the target (4).

7. System according to any one of claims 1 to 3,
**characterised in that** it further comprises a targeting laser device (24), configured to emit a targeting laser beam (25) on the predetermined zone (10) to be reached on the target (4),
and **in that** each of the targeting modules (9) comprises:
- a second detection surface (18) configured to receive an image (26) that represents a position of the targeting laser beam (24) on the target and a position of the light beam (3) on the target (4),
- a unit for locating (20) configured to locate on the image (26) received by the second detection surface (18) the position of the targeting laser beam (25) on the target (4) and the current position of the light beam (3) on the target (4),
- a unit for calculating (21) configured to calculate a movement to be carried out between the current position of the light beam (3) on the target (4) and the position of the targeting laser beam (25) on the target (4),
- a movement unit (22) configured to move the light source (2) such that the current position of the light beam (3) on the target is superposed with the position of the targeting laser beam (25) on the target, from the movement to be carried out calculated by the unit for calculating (21).

8. System according to claim 7,
**characterised in that** it further comprises a plate (23) arranged in the axis of propagation (5), with the plate (23) having a surface configured to receive the light beam (3) from the light source (2) and to receive the image (26) that represents the position of the targeting laser beam (25) on the target and the position of the light beam (3) on the target,
and **in that** the surface is capable of transmitting the light beam (3) from the light source (2) and to reflect towards the second detection surface (18) the image (26) that represents the position of the targeting laser beam (25) on the target and the position of the light beam (3) on the target.

9. System according to claim 7,
**characterised in that** it further comprises a plate (23) arranged in the axis of propagation (5), with the plate (23) having a surface configured to receive the light beam (3) from the light source (2) and to receive the image (26) that represents the position of the targeting laser beam (25) on the target and the position of the light beam (3) on the target,
and **in that** the surface is capable of reflecting the light beam (3) from the light source (2) and to transmit towards the second detection surface (18) the image (26) that represents the position of the targeting laser beam (25) on the target and the position of the light beam (3) on the target.

10. Method for using the system for tracking (1) a target (4) and for compensating for atmospheric turbulence according to any one of claims 1 to 9,
**characterised in that** it comprises the following steps, repeated cyclically:
- a step (E1) of emitting, implemented by each of the light sources (2), consisting of emitting a light beam (3) to the target (4) along an axis of propagation (5) in an emission direction (E),
- a step (E2) of collimating light beams (3), implemented by each of the collimators (6), consisting of collimating each of the light beams (3) emitted by each of the light sources (2),
- a step (E3) of targeting, implemented by each of the targeting modules (9), consisting of leading the light beam (3) from the light source (2) to reach a predetermined zone (10) of the target (4),
- a step (E4) of detecting, implemented by each of the detection modules (11), consisting of receiving and detecting on the first detection surface (12) the portion of the beam (8) reflected by the reflecting plane (29) of the reference device (7) at a current position,
- a step (E5) of determining an angle of deviation, implemented by each of the modules for determining an angle of deviation (13), consisting of determining an angle of deviation (β₁ β₂, β₃) from a spatial shift on the first detection surface (12) between a reference position on the first detection surface (12) and the current position, the angle of deviation (β₁ β₂, β₃) being determined after each of the targeting modules (9) has led each of the light beams (3) to reach the predetermined zone (10) of the target (4), the angle of deviation (β₁ β₂, β₃) corresponding to an angle between the portion of the beam (8) reflected by the reflecting plane (29) of the reference device (7) and the axis of propagation (5),
- a step (E6) of determining phase deviation, implemented by the module for determining phase deviation (28), consisting of determining phase deviations from angles of deviation (β₁ β₂, β₃) determined in the step (E5) of determining angle of deviation, the step (E6) of determining phase deviation comprising the determining of a wave front reconstituted from angles of deviation (β₁ β₂, β₃), with the phase deviations being determined in the step (E6) of determining phase deviation by comparing the reconstituted wave front with a plane wave front which is parallel to the reflecting plane (29) of the reference device (7)
- a step (E7) of adjusting, implemented by each of the adjustment modules (14), consisting of adjusting each of the light sources (2) to compensate for atmospheric turbulence according to the phase deviations determined in the step (E6) of determining phase deviation (28).

11. Method according to claim 10,
**characterised in that** the step (E3) of targeting comprises the following substeps:
- a sub-step (E31) of receiving, implemented by a second detection surface (18), consisting of receiving an image (19) that represents the target (4) on the second detection surface (18),
- a sub-step (E32) of locating, implemented by a unit for locating (20), consisting of locating on the image (19) of the target (4) received by the second detection surface (18) a position of the predetermined zone (10) to be reached on the target (4) by the light beam (3) and a current position of the zone reached by the light beam (3),
- a sub-step (E33) of calculating, implemented by a unit for calculating (21), consisting of calculating a movement to be carried out between the current position of the zone reached by the light beam (3) and the position of the predetermined zone (10) to be reached on the target (4),
- a sub-step (E34) of moving, implemented by a movement unit (22), consisting of moving the light source (2) such that the current position of the zone reached by the light beam (3) is superposed with the position of the predetermined zone (10) to be reached, from the movement to be carried out calculated by the unit for calculating (21).

12. Method according to claim 10,
**characterised in that** the step of targeting (E3) comprises the following substeps:
- a sub-step (E35) of emitting, implemented by a targeting laser device (24), consisting of emitting a targeting laser beam (25) on the predetermined zone (10) to be reached on the target (4),
- a sub-step (E36) of receiving, implemented by a second detection surface (18), consisting of receiving an image (26) that represents a position of the targeting laser beam (25) on the target (4) and a position of the light beam (3) on the target (4),
- a sub-step (E37) of locating, implemented by a unit for locating (20), consisting of locating on the image (26) received by the second detection surface (18) the position of the targeting laser beam (25) on the target (4) and the current position of the light beam (3) on the target (4),
- a sub-step (E38) of calculating, implemented by a unit for calculating (21), consisting of calculating a movement to be carried out between the current position of the light beam (3) on the target (4) and the position of the targeting laser beam (25) on the target (4),
- a sub-step (E39) of moving, implemented by a movement unit (22), consisting of moving the light source (2) such that the current position of the light beam (3) on the target (4) is superposed with the position of the targeting laser beam (25) on the target (4), from the movement to be carried out calculated by the unit for calculating (21).
